(19) Europäisches Patentamt

European Patent Office

Office européen des brevets

(11) Veröffentlichungsnummer: **0 249 010 B1**

# (12) EUROPÄISCHE PATENTSCHRIFT

(45) Veröffentlichungstag der Patentschrift: **18.11.93**

(21) Anmeldenummer: **87105649.5**

(22) Anmeldetag: **16.04.87**

Die Akte enthält technische Angaben, die nach dem Eingang der Anmeldung eingereicht wurden und die nicht in dieser Patentschrift enthalten sind.

(51) Int. Cl.⁵: **C08K 3/22**, C08L 23/10, //(C08L23/10,23:16,23:04,31:04, 33:06)

(54) **Schwerbrennbare thermoplastische Formmassen auf der Basis von Polymerblends aus Polypropylen und Magnesiumhydroxid.**

(30) Priorität: **17.05.86 DE 3616756**
**16.06.86 DE 3620273**

(43) Veröffentlichungstag der Anmeldung:
**16.12.87 Patentblatt 87/51**

(45) Bekanntmachung des Hinweises auf die Patenterteilung:
**18.11.93 Patentblatt 93/46**

(84) Benannte Vertragsstaaten:
**AT BE CH DE ES FR GB IT LI NL SE**

(56) Entgegenhaltungen:
**EP-A- 0 052 868**
**EP-A- 0 120 562**
**GB-A- 2 150 142**

**Encyclopedia of Polymer Science + Engineering, vol. 6, p. 522-4 + 562**

(73) Patentinhaber: **KALI UND SALZ AKTIENGE-SELLSCHAFT**
**Friedrich-Ebert-Strasse 160**
**D-34119 Kassel(DE)**

(72) Erfinder: **Kerscher, Utto, Dr.**
**Am Beissel 25**
**D-5024 Erftstadt 1(DE)**
Erfinder: **Metzemacher, Dieter**
**Gloedenstrasse 20**
**D-5000 Köln 60(DE)**
Erfinder: **Neukirchen, Ernst**
**Vorsterstrasse 75**
**D-5000 Köln 91(DE)**

(74) Vertreter: **Werner, Hans-Karsten, Dr. et al**
**Patentanwälte**
**von Kreisler-Selting-Werner,**
**Postfach 10 22 41**
**D-50462 Köln (DE)**

EP 0 249 010 B1

**Beschreibung**

Die Erfindung betrifft mit Silan gecoatetem Magnesiumhydroxid, hochgefüllte, schwerbrennbare thermoplastische Formmassen, deren Basismaterial aus Polymerblends Von Polypropylen und Ethylen-Propyler-Terpolymer-Kautschuk besteht.

Die Brandschutzausrüstung von thermoplastischen Kunststoffen mit Kombinationen aus Halogenverbindungen und Synergisten, wie Verbindungen der Phosphors, Antimons, Wismuts und Bors ist aus

1. Vogel, "Flammfestmachen von Kunststoffen" Hüthig-Verlag, Heidelberg, 1966, Seiten 94-102

2. Troitzsch, "Brandverhalten von Kunststoffen" Hanser-Verlag, Münschen, 1982, Seiten 1-63

bekannt.

Neben der Möglichkeit der Brandschutzausrüstung thermoplastischer Kunststoffe mit Halogenverbindungen besteht auch die Möglichkeit der Brandschutzausrüstung mit halogenfreien Flammschutzmitteln auf der Basis von Phosphorverbindungen und Stickstoffverbindungen, wie beispielsweise der DE-OS 30 19 617, DE-OS 28 27 867 und der DE-OS 34 01 835 zu entnehmen ist.

Weiter ist aus der EP-PS 00 52 868 bekannt, daß Styrolpolymerisate mit hohen Mengen an Magnesiumhydroxid flammgeschützt ausgerüstet werden können. Die Einsatzmengen der halogenfreien Flammschutzmittel liegen jedoch bei 50-70 Gew-%, um die Testbedingungen UL 94 V-0 nach Underwriter's Laboratories zu erreichen. Gleichzeitig bewirken die hohen Füllstoffmengen eine starke Verminderung der mechanischen Eigenschaften, insbesondere die Reißdehnung und die Schlagzähigkeit, der brandgeschützt ausgerüsteten thermoplastischen Kunststoffe, so daß sie als Werkstoffe nur bedingt eingesetzt werden können.

GB-A-2150142 beschreibt schwerbrennbare Polyolefin-Zusammensetzungen, die 40-70 Gew.% Magnesiumhydroxid und 0.3-10%, auf Basis des Magnesiumhydroxids, eines N-Hydroxyalkylamids einer höheren Fettsaure als Dispergiermittel enthalten.

Es bestand daher die Aufgabe, eine mit Magnesiumhydroxid hochgefüllte thermoplastische Formmasse zu entwickeln, die gemäß UL 94 V-0 brandgeschützt ist und die Nachteile der Verschlechterung der mechanischen Eigenschaften, wie sie oben dargestellt sind, nicht aufweist.

Gegenstand der Erfindung sind schwerbrennbare thermoplastische Formmassen mit hoher Schlagzähigkeit und hoher Reißdehnung auf der Basis von Polymerblends. Diese Polymerblends sind dadurch gekennzeichnet, daß sie aus einem Gemisch bestehen von Polypropylen-Homo- u./o. -Copolymerisat, Ethylen-Propylen-Terpolymer-Kautschuk und mit Silan gecoatetem Magnesiumhydroxid sowie gegebenenfalls Polyethylen-Homo- u./o. -Copolymerisat, Polyacrylsäureester-Homo- u./o. -Copolymerisat und Polyvinylacetat-Homo- u./o. -Copolymerisat. Die Zusammensetzung der Polymerblends in den Formmassen besteht aus 1-40 Gew-%, vorzugsweise 20-35 Gew-%, Polypropylen-Homo- u./o. -Copolymerisat (Komponente A) , 0-10 Gew-%, vorzugsweise 2-5 Gew-% Polyethylen-Homo- u./o. -Copolymerisat (Komponente B), 0-5 Gew-%, vorzugsweise 0,8-3 Gew-%, Polyacrylsäureester- Homo- u./o. -Copolymerisat (Komponente C), 0-5 Gew-%, vorzugsweise 0,8-3 Gew-%, Polyvinylacetat- Homo- u./o. -Copolymerisat (Komponente D) und 0,5-10 Gew-%, vorzugsweise 2-5 Gew-%, Ethylen-Propylen-Terpolymer-Kautschuk (Komponente E), wobei die Summe aus den Komponenten A bis E = 30-40 Gew-% und das gecoatete Magnesiumhydroxid 60-70 Gew-% der Gesamtformmasse beträgt. Vorzugsweise ist in dem Polymerblend außer den Komponenten A und E mindestens eine der Komponenten C oder D vorhanden.

Als Komponenten für die Polymerblends eignen sich insbesondere Polypropylen-Homopolymerisat mit einem mittleren Molekulargewicht von 240.000-380.000 u./o. Polypropylen-Ethylen-Randomcopolymerisat mit einem mittleren Molekulargewicht von 440.000-470.000, Polyethylen-Homopolymerisat mit einem mittleren Molekulargewicht von 40.000-100.000 u./o. Ethylen-Acrylsäure-Copolymerisat mit einem mittleren Molekulargewicht von 100.000-250.000 u./o. Ethylen-Vinylacetat-Copolymere mit einem mittleren Molekulargewicht von 50.000-150.000, Methacrylsäureester- u./o. Acrylsäureester-Homopolymerisate mit einem mittleren Molekulargewicht von 200.000-800.000, Polyvinylacetat-Homopolymerisat mit einem mittleren Molekulargewicht von 300.000- 1.000.000 und Ethylen-Propylen-Ethylidennorbonen-Terpolymer-Kautschuk mit etwa 30 Gew-% Propylen und etwa 5-11 Doppelbindungen auf 1000 C-Atome.

Prinzipiell können aber auch Komponenten mit höheren oder niedrigeren Molekulargewichten und anderen Anteilen der Komponenten in den Copolymerisaten verwendet werden. Entscheidend ist, daß durch die Verwendung von Polymerblends anstelle von reinem Polypropylen auch bei hohem Füllungsgrad mit Magnesiumhydroxid eine gute Reißdehnung und Schlagzähigkeit bei gutem Brandverhalten beobachtet wird.

Zur Herstellung der erfindungsgemäßen Polymerblends werden die einzelnen Polymermassen, die aus etwa

1-40 Gew-%, vorzugsweise 20-35 Gew-%, der Komponente A

0-10 Gew-%, vorzugsweise 2-5 Gew-%, der Komponente B
0-5 Gew-%, vorzugsweise 0,8-3 Gew-%, der Komponente C
0-5 Gew-%, vorzugsweise 0,8-3 Gew-%, der Komponente D
und 0,5-10 Gew-%, vorzugsweise 2-5 Gew-%, der Komponente E

bestehen, in einem Banburry-Mischer kurze Zeit bei einer Temperatur von 190-200°C homogen gemischt. Anschließend werden 50-75 Gew-%, vorzugsweise 60-65 Gew-%, Silan gecoatetes Magnesiumhydroxid zugegeben und die Mischung bei 200°C homogen geknetet.

Die so erhaltenen, homogenen, thermoplastischen Formmassen werden auf einen beheizten Kalander gegeben, als Folie abgezogen und granuliert. Das erhaltene Granulat wird bei 240°C auf einer Spritzgußmaschine zu Normprüfkörpern verspritzt.

In den nachfolgenden Beispielen wird die Herstellung der erfindungsgemäßen mit Silan gecoatetem Magnesiumhydroxid hochgefüllten, schwerbrennbaren thermoplastischen Formmassen beschrieben.

Beispiel 1

In einem Banburry-Mischer werden 3,4 kg Polypropylen-Homopolymerisat, mit einem mittleren Molekulargewicht von 350.000, 0,23 kg Polyethylen-Homopolymerisat mit einem mittleren Molekulargewicht von 65.000, 0,23 kg Ethylen-Propylen-Ethylidennorbonen-Terpolymer-Kautschuk mit etwa 30 Gew-% Polypropylen und etwa 7 Doppelbindungen auf 1000 C-Atome und 0,14 kg Ethylen-Vinylacetat-Copolymerisat mit einem mittleren Molekulargewicht von 80.000 bei 190-200°C über 3 Minuten homogen gemischt. Anschließend werden 6 kg mit 2 Gew-% Silan gecoatetes Magnesiumhydroxid mit einer Kornverteilung von 100 % < 10 μ, 90 % < 5 μ, zugegeben und die gesamte Mischung 10 Minuten lang bei 200°C homogen geknetet.

Beispiel 2

Analog dem Beispiel 1 werden 2,9 kg Polypropylen-Homopolymerisat mit einem mittleren Molekulargewicht von 350.000, 0,45 kg Polyethylen-Homopolymerisat mit einem mittleren Molekulargewicht von 80.000, 0,45 kg Ethylen-Propylen-Ethylidennorbonen-Terpolymer-Kautschuk mit etwa 30 Gew-% Propylen und etwa 7 Doppelbindungen auf 1000 C-Atome und 0,2 kg Ethylen-Vinylacetat-Copolymerisat mit einem mittleren Molekulargewicht von 100.000 bei 190-200°C über 3 Min. homogen gemischt. Anschließend werden 6 kg mit 2 Gew-% Silan gecoatetes Magnesiumhydroxid mit einer Kornverteilung von 100 % < 10 μ, 90 % < 5 μ, zugegeben. Mischen und Verarbeitung erfolgt wie in Beispiel 1 beschrieben.

Beispiel 3

Analog dem Beispiel 1 werden 3,0 kg Polypropylen-Homopolymerisat mit einem mittleren Molekulargewicht von 350.000, 0,2 kg Polyethylen-Homopolymerisat mit einem mittleren Molekulargewicht von 65.000, 0,2 kg Ethylen-Propylen-Ethylidennorbonen-Terpolymer-Kautschuk mit etwa 30 Gew-% Propylen und etwa 7 Doppelbindungen auf 1000 C-Atome und 0,1 kg Ethylen-Vinylacetat-Copolymerisat mit einem mittleren Molekulargewicht von 80.000 bei 190-200°C über 3 Minuten homogen gemischt. Anschließend werden 6,5 kg mit 2 Gew-% Silan gecoatetes Magnesiumhydroxid mit einer Kornverteilung von 100 % < 10 °, 90 % < 5 μ, zugegeben. Mischen und Verarbeitung erfolgt wie in Beispiel 1 beschrieben.

Beispiel 4

Analog dem Beispiel 1 werden 2,5 kg Polypropylen-Homopolymerisat mit einem mittleren Molekulargewicht von 350.000, 0,4 kg Polyethylen-Homopolymerisat mit einem mittleren Molekulargewicht von 80.000, 0,4 kg Ethylen-Propylen-Ethylidennorbonen-Terpolymer-Kautschuk mit etwa 30 % Propylen und etwa 7 Doppelbindungen auf 1000 C-Atome und 0,2 kg Ethylen-Vinylacetat-Copolymerisat mit einem mittleren Molekulargewicht von 100.000 bei 190-200°C über 3 Minuten homogen gemischt. Anschließend werden 6,5 kg mit 2 Gew-% Silan gecoatetes Magnesiumhydroxid mit einer Kornverteilung von 100 % < 10 μ, 90 % < 5 μ, zugegeben. Mischen und Verarbeitung erfolgt wie in Beispiel 1 beschrieben.

Beispiel 5

Analog dem Beispiel 1 werden 2,9 kg Polyethylen-Polypropylen-Copolymerisat mit einem mittleren Molekulargewicht von 450.000, 0,3 kg Ethylen-Propylen-Ethylidennorbonen-Terpolymer-Kautschuk mit etwa 30 Gew-% Propylen und etwa 7 Doppelbindungen auf 1000 C-Atome, 0,1 kg Ethylen-Vinylacetat-Copolymerisat mit einem mittleren Molekulargewicht von 80.000 und 0,2 kg Ethylen-Acrylsäureester-Copolymerisat mit einem mittleren Molekulargewicht von 650.000 bei 190-200°C über 3 Minuten homogen gemischt. Anschließend werden 6,5 kg mit 2 Gew-% Silan gecoatetes Magnesiumhydroxid mit einer Kornverteilung von 100 % < 10 μ, 90 % < 5 μ zugegeben. Mischen und Verarbeitung erfolgt wie in Beispiel 1 beschrieben.

Beispiel 6

Analog dem Beispiel 1 werden 3,0 kg Polyethylen-Polypropylen-Copolymerisat mit einem mittleren Molekulargewicht von 450.000, o,3 kg Ethylen-Propylen-Ethylidennorbonen-Terpolymer-Kautschuk mit etwa 30 Gew-% Propylen und etwa 7 Doppelbindungen auf 1000 C-Atome, 0,07 kg Polyvinylacetat mit einem mittleren Molekulargewicht von 800.000 und 0,13 kg Polymethylmethacrylat mit einem mittleren Molekulargewicht von 550.000 bei 190-200°C über 3 Minuten gemischt. Anschließend werden 6,5 kg mit 2,5 Gew-% Silan gecoatetes Magnesiumhydroxid mit einer Kornverteilung von 100 % < 10 μ, 90 % < 5 μ zugegeben. Mischen und Verarbeitung erfolgt wie in Beispiel 1 beschrieben.

Beispiel 7 (Vergleichsbeispiel)

In einem Banburry-Mischer werden 4,0 kg Polypropylen-Homopolymerisat mit einem mittleren Molekulargewicht von 35.000 und 6,0 kg mit 2 Gew-% Silan gecoatetes Magnesiumhydroxid mit einer Kornverteilung von 100 % < 10 μ, 90 % < 5 μ, eingefüllt und bei 200°C 10 Minuten lang zu einer homogenen Masse geknetet. Die Weiterverarbeitung erfolgt analog dem Beispiel 1.

Beispiel 8 (Vergleichsbeispiel)

Analog dem Beispiel 7 werden in einem Banburry-Mischer 3,5 kg Polypropylen-Homopolymerisat mit einem mittleren Molekulargewicht von 350.000 und 6,5 kg mit 2 Gew-% Silan gecoatetes Magnesiumhydroxid mit einer Kornverteilung von l00 % < 10μ 90 % < 5 μ, eingefüllt und bei 200°C 10 Minuten lang zu einer homogenen Masse geknetet. Die Weiterverarbeitung erfolgt analog dem Beispiel 1.

Die aus den Mischungen entsprechend den Beispielen 1-8 hergestellten Normprüfkörper wurden bei Normklima 23°C/65 % rel.Feuchte 24 Stunden lang gelagert und das Brandverhalten nach UL 94 bei 3,2 mm Materialstärke geprüft. Außerdem wurden die mechanischen Eigenschaften, wie Zug- und Reißfestigkeit, Reißdehnung, Schlagzähigkeit und Elastizitätsmodul bestimmt. Weiterhin wurde die Formbeständigkeit in der Wärme bestimmt.

In den nachfolgenden Tabellen 1 und 2 sind die Rezepturen, bzw. das Brandverhalten und die mechanischen Eigenschaften der entsprechend den Beispielen 1-8 hergestellten Mischungen zusammengestellt.

Tabelle 1

| Einsatzstoffe | Dimension | Beispiele | | | | | | | |
|---|---|---|---|---|---|---|---|---|---|
| | | 1 | 2 | 3 | 4 | 5 | 6 | 7 | 8 |
| Polypropylen | Gew-% | 34,0 | 29,0 | 30,0 | 25,0 | 29,0 | 30,0 | 40,0 | 35,0 |
| Polyethylen | " | 2,3 | 4,5 | 2,0 | 4,0 | - | - | - | - |
| EPDM-Kautschuk | " | 2,3 | 4,5 | 2,0 | 4,0 | 3,0 | 3,0 | - | - |
| Ethylen-Vinyl-acetat-Copolym. | " | 1,4 | 2,0 | 1,0 | 2,0 | 1,0 | - | - | - |
| Ethylen-Acryl-säureester-Copolymerisat | " | - | - | - | - | 2,0 | - | - | - |
| Polyvinylacetat | " | - | - | - | - | - | 0,7 | - | - |
| Polymethylmeth-acrylat | " | - | - | - | - | - | 1,3 | - | - |
| $Mg(OH)_2$ | " | 60 | 60 | 65 | 65 | 65 | 65 | 60 | 65 |

EP 0 249 010 B1

**Tabelle 2**

| Eigenschaften | Prüfmethode | Dimension | Beispiele 1 | 2 | 3 | 4 | 5 | 6 | 7 | 8 |
|---|---|---|---|---|---|---|---|---|---|---|
| Brandverhalten | UL 94 | 3,2 mm | V-0 | V-0 | V-0 | V-0 | V-0 | V-0 | V-1 | V-0 |
| Zugfestigkeit | DIN 53455 | N/mm² | 25 | 21 | 25 | 21 | 20 | 21 | 27 | 28 |
| Reißfestigkeit | DIN 53455 | N/mm² | 25 | 20 | 25 | 21 | 20 | 20 | 26 | 27 |
| Reißdehnung | DIN 53455 | m/m | 0,08 | 0,10 | 0,07 | 0,10 | 0,08 | 0,07 | 0,02 | 0,01 |
| Schlagzähigkeit | DIN 53453 | kJ/m² | 33 | 51 | 23 | 44 | 40 | 38 | 11 | 8 |
| Formbeständigkeit i.d.Wärme | DIN 53461 Verf. B | °K | 383 | 359 | 388 | 362 | 365 | 369 | 403 | 405 |
| E-Modul Zugversuch | DIN 53457 | N/mm² | 2800 | 2100 | 3250 | 2250 | 2400 | 2600 | 4500 | 4850 |

**Patentansprüche**

1. Schwerbrennbare thermoplastische Formmassen mit hoher Schlagzähigkeit und hoher Reißdehnung auf der Basis von Polymerblends, dadurch gekennzeichnet, daß die Polymerblends aus einem Gemisch bestehen von 1 bis 40 Gew.-% Polypropylen-Homo- und/oder -Copolymerisat, 0,5 bis 5 Gew.-% Ethylen-Propylen-Terpolymer-Kautschuk und 40 bis 70 Gew.-% mit Silan gecoatetem Magnesiumhydroxid sowie gegebenenfalls Polyethylen-Homo- und/oder -Copolymerisat, Polyacrylsäureester-Homo- und/oder -Copolymerisat und Polyvinylacetat-Homo- und/oder -Copolymerisat.

**2.** Schwerbrennbare thermoplastische Formmassen nach Anspruch 1, dadurch gekennzeichnet, daß die Zusammensetzung der Polymerblends in den Formmassen aus 20 bis 35 Gew.-% Polypropylen-Homo- und/oder -Copolymerisat, 0 bis 10 Gew.-%, vorzugsweise 2 bis 5 Gew.-%, Polyethylen-Homo- und/oder -Copolymerisat, 0 bis 5 Gew.%, vorzugsweise 0,8 bis 3 Gew.-%, Polyacrlysäureester-Homo- und/oder -Copolymerisat, 0 bis 5 Gew.-%, vorzugsweise 0,8 bis 3 Gew.-%, Polyvinylacetat-Homo- und/oder -Copolymerisat, 2 bis 5 Gew.-% Ethylen-Proplylen-Terpolymer-Kautschuk und 50 bis 65 Gew.-% mit Silan gecoatetes Magnesiumhydroxid besteht.

**3.** Schwerbrennbare thermoplastische Formmassen nach Ansprüchen 1 und 2, dadurch gekennzeichnet, daß für die Polymerblends ein Polypropylen-Homopolymerisat mit einem mittleren Molekulargewicht von 240.000 bis 380.000 und/oder Polypropylen-Ethylen-Randomcopolymerisat mit einem mittleren Molekulargewicht von 440.000 bis 470.000 verwendet wird.

**4.** Schwerbrennbare thermoplastische Formmassen nach Ansprüchen 1 bis 3, dadurch gekennzeichnet, daß für die Polymerblends Polyethylen-Homopolymerisat mit einem mittleren Molekulargewicht von 40.000 bis 100.000 und/oder EthylenAcrylsäureester-Copolymerisat mit einem mittleren Molekulargewicht von 100.000 bis 250.000 und/oder Ethylen-Vinylacetat-Copolymere mit einem mittleren Molekulargewicht von 50.000 bis 150.000 verwendet werden.

**5.** Schwerbrennbare thermoplastische Formmassen nach Ansprüchen 1 bis 4, dadurch gekennzeichnet, daß für die Polymerblends Methacrylsäureester- und/oder Acrylsäureester-Homopolymerisate mit einem mittleren Molekulargewicht von 200.000 bis 800.000 verwendet werden.

**6.** Schwerbrennbare thermoplastische Formmassen nach Ansprüchen 1 bis 5, dadurch gekennzeichnet, daß für die Polymerblends Polyvinylacetat-Homopolymerisat mit einem mittleren Molekulargewicht von 300.000 bis 1.000.000 verwendet wird.

**7.** Schwerbrennbare thermoplastische Formmassen nach Ansprüchen 1 bis 6, dadurch gekennzeichnet, daß für die Polymerblends Ethylen-Propylene-Ethylidennorbonen-Terpolymer-Kautschuk mit etwa 30 Gew.-% Propylen und etwa 5-11 Doppelbindungen auf 1000 C-Atome verwendet wird.

**Claims**

**1.** Thermoplastic moulding compounds of low combustibility having high impact strength and high elongation at break and based on polymer blends, characterized in that the polymer blends consist of a mixture of from 1 to 40% by weight of polypropylene homo- and/or copolymerizate, from 0,5 to 5% by weight of ethylene-propylene-terpolymerizate rubber and from 40 to 70% by weight of silane-coated magnesium hydroxide and optionally polyethylene homo- and/or copolymerizate, polyacrylic ester homo- and/or copolymerizate and polyvinyl acetate homo- and/or copolymerizate.

**2.** The thermoplastic moulding compounds of low combustibility according to claim 1, characterized in that the composition of polymer blends in the moulding compounds consists of from 20 to 35% by weight of polypropylene homo- and/or copolymerizate, from 0 to 10% by weight, preferably from 2 to 5% by weight, of polyethylene homo- and/or copolymerizate, from 0 to 5% by weight, preferably from 0.8 to 3% by weight, of polyacrylic ester homo- and/or copolymerizate, from 0 to 5% by weight, preferably from 0.8 to 3% by weight, of polyvinyl acetate homo- and/or copolymerizate, from 2 to 5% by weight of ethylene-propylene-terpolymer rubber, and from 50 to 65% by weight of silane-coated magnesium hydroxide.

**3.** The thermoplastic moulding compounds of low combustibility according to claims 1 and 2, characterized in that a polypropylene homopolymerizate having an average molecular weight of from 240,000 to 380,000 and/or a poly(propylene-ethylene) random copolymerizate having an average molecular weight of from 440,000 to 470,000 is used for the polymer blends.

**4.** The thermoplastic moulding compounds of low combustibility according to claims 1 to 3, characterized in that a polyethylene homopolymerizate having an average molecular weight of from 40,000 to 100,000 and/or an ethylene-acrylic ester copolymerizate having an average molecular weight of from 100,000 to 250,000 and/or an ethylene-vinyl acetate copolymer having an average molecular weight of from 50,000 to 150,000 is used for the polymer blends.

**5.** The thermoplastic moulding compounds of low combustibility according to claims 1 to 4, characterized in that methacrylic ester and/or acrylic ester homopolymerizates having an average molecular weight of from 200,000 to 800,000 are used for the polymer blends.

**6.** The thermoplastic moulding compounds of low combustibility according to claims 1 to 5, characterized in that polyvinyl acetate homopolymerizate having an average molecular weight of from 300,000 to 1,000,000 is used for the polymer blends.

**7.** The thermoplastic moulding compounds of low combustibility according to claims 1 to 6, characterized in that ethylene-propylene-ethylidenenorbornene terpolymer rubber having about 30% by weight of propylene and about 5 to 11 double bonds per 1,000 carbon atoms is used for the polymer blends.

**Revendications**

**1.** Matières à mouler thermoplastiques résistant à la flamme, à résilience et à déformation à la rupture élevées, à base de mélanges de polymères, caractérisées en ce que les mélanges de polymères comprennent 1 à 40 % en poids d'homo- et/ou de copolymère de polypropylène, 0,5 à 5 % en poids d'un caoutchouc terpolymère d'éthylène-propylène et de 40 à 70% en poids d'hydroxyde de magnésium enduit de silane ainsi que, le cas échéant, un homo- et/ou un copolymère polyéthylène, un homo- et/ou un copolymère polyacrylate et un homo- et/ou un copolymère polyacétate de vinyle.

**2.** Matières à mouler thermoplastiques résistant à la flamme selon la revendication 1, caractérisées en ce que la composition des mélanges de polymères des matières à mouler comprend 20 à 35 % en poids d'homo- et/ou de copolymère polypropylène, 0 à 10 % en poids - et de préférence 2 à 5 % en poids - d'homo-et/ou de copolymère polyéthylène, 0 à 5 % en poids - de préférence 0,8 à 3 % en poids - d'homo- et/ou de copolymère de polyacrylate, 0 à 5 % en poids - de préférence 0,8 à 3 % en poids - d'homo-et/ou de copolymère polyacétate de vinyle, 2 à 5 % en poids de caoutchouc terpolymère d'éthylène-propylène et 50 à 65 % en poids d'hydroxyde de magnésium enduit de silane.

**3.** Matières à mouler thermoplastiques résistant à la flamme selon les revendications 1 et 2, caractérisées en ce qu'un homopolymère polypropylène ayant un poids moléculaire moyen de 240 000 à 380 000 et/ou du polypropylène-éthylène copolymérisé de façon aléatoire ayant un poids moléculaire moyen de 440 000 à 470 000 sont utilisés pour les mélanges de polymères.

**4.** Matières à mouler thermoplastiques résistant à la flamme selon les revendications 1 à 3, caractérisées en ce qu'un homopolymère polyéthylène ayant un poids moléculaire moyen de 40 000 à 100 000 et/ou un copolymère éthylène-acrylate ayant un poids moléculaire moyen de 100 000 à 250 000 et/ou un copolymère d'éthylène-acétate de vinyle ayant un poids moléculaire moyen de 50 000 à 150 000 sont utilisés pour les mélanges de polymères.

**5.** Matières à mouler thermoplastiques résistant à la flamme selon les revendications 1 à 4, caractérisées en ce que des homopolymères de méthacrylate et/ou d'acrylate ayant un poids moléculaire moyen de 200 000 à 800 000 sont utilisés pour les mélanges de polymères.

**6.** Matières à mouler thermoplastiques résistant à la flamme selon les revendications 1 à 5, caractérisées en ce qu'un homopolymère polyacétate de vinyle ayant un poids moléculaire moyen de 300 000 à 1 000 000 est utilisé pour les mélanges de polymères.

**7.** Matières à mouler thermoplastiques résistant à la flamme selon les revendications 1 à 6, caractérisées en ce que du caoutchouc terpolymère d'éthylène-propylène-alkylidène-norbornène avec quelque 30 % en poids de propylène et environ 5 à 11 doubles liaisons sur 1000 atomes C est utilisé pour les mélanges de polymères.

8